# EUROPEAN PATENT APPLICATION

(11) **EP 3 309 130 A1**
(43) Date of publication of application: **18.04.2018**
(21) Application number: 16193380.9
(22) Date of filing: 11.10.2016
(51) Int. Cl.: C02F 1/78, C02F 3/08, C02F 1/20, C02F 3/12, C02F 101/20, C02F 101/32, C02F 103/10

(54) **PROCESS AND FACILITY FOR TREATING PRODUCED WATER FROM AN OIL & GAS FIELD**

(71) Applicant: Suez International, 92040 Paris la Défense Cedex (FR); Total SA, 92400 Courbevoie (FR)
(72) Inventor: SEGUES, Bertrand, 64000 Pau (FR); BRETON, Audrey, 64230 Lescar (FR); LESAGE, Nicolas, 64160 Maucor (FR); PEDENAUD, Pierre, 64230 lescar (FR); BALDONI-ANDREY, Patrick, 64320 Idron (FR); BAIG, Sylvie, 78360 Montesson (FR); FUCHS, Cathy, 92150 Suresnes (FR); WALLIS, Craig, 75015 PARIS (FR)
(74) Representative: Cabinet Armengaud Aîné

(57) **Abstract**

The present invention concerns a method and a facility for treating Produced Water stream from a production well of an oil and gas field, said method and facility comprising:
- obtaining a first stream by directing the Produced Water stream to a system of separation by physical way (30);
- oxidizing the first stream by introducing in said stream an oxidant by means (60) for contacting the Produced Water stream with an oxidant;
- directing the oxidized stream to an aerobic bioreactor (50; 50a, 50b), to achieve a biological treatment.

## Description

The present invention concerns a process and a facility for treating Produced Water from an oil and or gas field.

The exploration and production of oil and gas generates a large quantity of water. The world average is 3 barrels of water for each barrel of oil produced and this ratio increases over the lifetime of the producing wells.

In mature oil fields where the reservoir pressure has reduced to the point that oil cannot be produced from the reservoir naturally, the oil can be produced by injecting a substance into the reservoir to displace oil towards a producing well and maintain reservoir pressure. Water is used as an injection fluid because it is immiscible with oil and will displace it, allowing more oil to be recovered from the reservoir. This process is known as Enhanced Oil Recovery (EOR) and more specifically as "water flooding" if only water is injected in the oil bearing formation, or as "chemical EOR" when water and chemicals are injected, or as "low salinity EOR" when low salinity water is injected and as "steam EOR" or Steam Assited Gravity Drainage (SAG-D) when water is injected as steam.

The water source for the enhanced oil recovery process can be aquifer water, surface water, seawater or recycled Produced Water. One of the main challenges for the Oil & Gas industry is the footprint of equipment due to large flowrate typically involved for oil fields but also due to offshore operations which require very compact systems. To reduce their environmental footprint and their water management costs, Oil & Gas companies are increasingly looking at reusing Produced Water for injection in the oil bearing formation. This option requires a comprehensive treatment process to avoid plugging the reservoir and the injection equipment with the undesired compounds contained in the Produced Water such as suspended solids, oil and scale forming dissolved solids.

Discharge to the environment becomes necessary where large excess quantities of produced water are separated which cannot be reinjected or used for EOR, or where the production has no reinjection requirement (typical of gas fields) then. Until recently, discharge to the environment (sea or surface water discharge) of such water has not been subject to strict regulation, meaning that there has been no requirement to remove pollutants other than oil and solids. However much higher levels of legislation and monitoring are now being applied; above all more attention is now being applied to dissolved organics content of the discharges. Produced water comprises a mixture of organic and inorganic materials. Factors such as the geological location of the land, its geological formation, and the type of hydrocarbon reserves affect the physical and chemical characteristics of the Produced Water. These characteristics depend on the nature of the well from which oil or gas is extracted, operating conditions and chemicals used in the production facilities.

Produced water is separated from crude oil or gas in a production separator. It contains in variable proportions: sands, clays, inorganic salts, corrosion products, carbon dioxide, etc. Produced water must be removed before hydrocarbons are stored and further processed. The main compounds of Produced Water include dissolved, soluble and dispersed hydrocarbons, dissolved inorganic compounds, dissolved organic compounds, insoluble compounds (formation of solid deposits from corrosion during production, bacteria, waxes, asphaltene, etc.), and dissolved gases.

To design a cost competitive solution to treat Produced Water it is therefore necessary to minimize the final by-product volumes to be disposed of. The byproducts of a Produced Water treatment line typically include an oily sludge stream generated by a pretreatment step concentrating the oil and suspended solids and a brine stream generated by a polishing step concentrating the dissolved solids.

Today several pretreatment methods exist to remove suspended solids and oil from Produced Water. Usual treatments involve firstly removing heavy solids (such as sand), then secondly any residual traces of oil which originate from the oil production stream. Then, the fine solids must be removed to prevent blocking of injection wells. Furthermore dissolved gas content has to be reduced, especially oxygen, and the sulfate-reducing bacteria must be destroyed. The produced water is thus generally treated in four stages. The first processing stage separates heavy solids from the produced water, for example by the use of hydrocyclones. The second processing stage separates water from oil using equipment such as API separators and hydro-cyclones. The third processing stage conditions the water for discharging to the sea, reinjection into the production wells or subsequent treatment by polishing filtration. The techniques used for tertiary treatment could include gas flotation, coalescence and centrifugation. The fourth processing stage employs filtration optionally on hydrophilic media to perform retention of residual oil drops and solid particles.

However, usual treatments exhibit one or several of the following drawbacks:
- Oil and solids which are not fully removed from the Produced Water can generate a plugging problem when produced water is reinjected into the reservoir or a fouling problem in the Produced Water polishing steps,
- Robustness is not ensured due to sensitivity to the blend of suspended solids and oil,
- Organic pollution is not removed since it resists to usual physical separation.

Flotation devices are commonly used to remove oil and solids from the Produced Water. To allow a good oil-water separation, high dosing rates of coagulant and chemicals are needed which are costly and produce a coagulated sludge as a byproduct. Oil in the coagulated sludge is not recovered which induces a revenue loss for the Oil & Gas operator. The dewatering and transportation of the coagulated sludge generates high operating costs.

Liquid/Liquid coalescing devices are used to coalesce and recover oil from oil-water mixtures. The liquid/liquid mixture typically enters the tubular coalescing element and flows through coalescing media. This process makes this technology very sensitive to suspended solids and therefore not robust to recover oil from Produced Water.

Both the Flotation and Coalescence processes are unable to fully remove oil from the Produced Water. The treated effluent contains suspended oil residuals that might generate a problem in the downstream polishing steps or during reinjection in the hydrocarbon bearing reservoir.

Ultrafiltration (UF) and Microfiltration (MF) membranes, unlike the two previous technologies, remove more than 99% of the water insoluble oil in the feed stream producing a high quality treated effluent. However, the UF and MF membranes generate an oily concentrate as a by-product that is 10 to 20 times more concentrated in oil and suspended solids than the feed water. To minimize the volume of by-product generated, the oily concentrate can be recirculated back to the upstream separation step where the oil and suspended solids can be separated from water. This option induces the following technical problem: the shear created by the recirculation induces an emulsification of the oil droplets contained in the concentrate, which leads to a poor separation in the upstream separation device. The emulsified oil droplets that were poorly removed in the pretreatment step tend to accumulate in the membrane feed stream and lead to membrane fouling.

Moreover, usual treatments do not take in charge the organic pollution which is not separable by physical way except stage including adsorption.

Adsorption is an effective technique for dissolved compounds removal, but it requires frequent replacement of the adsorbent according to the water quality and the nature of the adsorbent. The spent media is moreover a waste to evacuate or regenerate.

Chemical oxidation can be an attractive alternative from the performance viewpoint. Nevertheless, the energy consumption and the size of the equipment involved is a barrier to its application when the ozonation is used in intensive treatment.

Biological treatment is commonly used in industrial sector and has the advantage of high effectiveness with low costs for removing soluble pollutants. However, biodegradation could be challenging because of low biodegradability and high salinity of Produced Water. The feasibility of the bio-treatment of saline Produced Water (up to 200 g/L TDS) is demonstrated with pilot reactors. An acclimation phase is required to develop species capable of performing organics biodegradation in saline conditions. Furthermore, biofilms are more increasingly used in industrial wastewater bio-treatment because biomass arranged in biofilm is more resistant to feed variations and biofilm reactors allow for development of biomass with a low growth rate, which is capable of biodegrading complex organic compounds.

The present invention relates to a method for treating a Produced Water stream from a production well of an oil and/or gas field, said method comprising:
- a first step of obtaining a first stream by directing the Produced Water stream to a system of separation by physical way,
- a second step of oxidizing the first stream by introducing in said stream an oxidant,
- a third step of directing the oxidized stream to an aerobic bioreactor to achieve a biological treatment.

The first step of separation by physical way is aimed at removing solid and oil from the produced water stream.

The second step of oxidizing the first stream is aimed at converting complex, dissolved organic molecules to simpler, more biodegradable compounds.

The third step of achieving a biological treatment is aimed at providing efficient degradation of dissolved organic pollutants in a reduced volume.

The invention as a combination of oxidation and bio-treatment permits a more compact and efficient process for treating Produced Water from an oil and gas field.

Indeed, oxidation is a promising process for the removal of organic substances which are recalcitrant to biological degradation. Advantageously, oxidation can reach the complete mineralization of pollutants or at least their transformation into more biodegradable products. Oxidation as pre-treatment could aim at increasing the biodegradability of the Produced Water before bio-treatment by the biological reactor. The advantage of coupling oxidation with bio-treatment is to achieve a high level of pollutant removal by taking benefit of the partial oxidation with a short contact time, and the subsequent enhanced bio-treatment provides a compact and efficient process.

According to one embodiment, the second step of oxidizing the stream and the third step of biological treatment can be concomitantly performed in the aerobic bioreactor. This provides the advantage of reducing the necessary amount of oxidant.

According to one other embodiment, said method comprises an intermediary step of directing the first stream to an aerobic bioreactor before performing the second step of oxidizing the first stream. This allows reducing the necessary amount of oxidant to be used in the second step.

Advantageously, the first step of separation comprises a step of stripping, by directing the first stream to a gas stripping device.

Preferably, the second step of oxidizing is performed by introduction of a chemical oxidant, and more preferably by introduction of ozone. The ozone can be introduced by injection in the first stream or thanks to an ozone contactor. The injection of ozone in the first stream, without using a contactor, allows decreasing the foot-print of the process.

More preferably, the second step of oxidizing the first stream is obtained by introducing ozone in an amount where the dose of transferred ozone is less or equal to 1 gram per gram of incoming Chemical Oxygen Demand of Produced Water.

According to one other embodiment, the third step of biological treatment is performed by directing the stream in an aerobic biofilm system type of Moving Bed Bioreactor (MBBR), Integral Film Activated Sludge (IFAS) or Biological Aerated Filter (BAF).

Advantageously, the third step of biological treatment is performed according to a volumetric applied load greater or equal to 2 kg of incoming soluble Chemical Oxygen Demand (COD) per m³ of bioreactor and per day.

The method applies preferentially to Produced Water for which the soluble chemical oxygen demand (COD) is less or equal to 50 g/L and the total dissolved solids are less or equal to 300 g/L. When biomass is exposed to said type of produced water of high salinity, and when the aerobic bioreactor is of type MBBR, IFAS, BAF, there is no more need to promote a flocculation for next separation of sludge in excess. Indeed the biomass is on a fixed support in the bioreactor. Biomass under high salinity conditions is not able to flocculate.

According to one other embodiment, the method comprises, before the first step, a preliminary step of directing Produced Water stream from a production well to primary oil-water separation device for a preliminary separation of suspended solids and oil from Produced Water stream.

The purified water stream recovered from the third step, according to its purity and content, can be reinjected in a hydrocarbon bearing formation or discharged to a surface water body.

The present invention relates also to a facility for treating a Produced Water stream from a production well of an oil and gas field, comprising a system of separation by physical way, said system being connected to an aerobic bioreactor wherein the facility comprises further means for contacting the Produced Water stream with an oxidant downstream of the system of separation and upstream of the aerobic bioreactor, or in the aerobic bioreactor.

Preferentially, the system of separation by physical way can be connected to a gas stripping device, said gas stripping device being located upstream of means for contacting the Produced Water stream with an oxidant.

According to one embodiment, the aerobic bioreactor may comprise a first stage and a second stage comprising a solid separation system.

According to one other embodiment, the aerobic bioreactor can be an aerobic biofilm system type of Moving Bed Bioreactor (MBBR), Integral Film Activated Sludge (IFAS) or Biological Aerated Filter (BAF).

According to others embodiments, the system of separation by physical way is selected in a list comprising cyclone, flotation systems, coalescing filters, gas stripping device, gravitational separation device, filtration device, or a combination thereof.

According to others embodiments, means for contacting the Produced Water stream with an oxidant comprises an ozone reactor located between the gas stripping device and the aerobic bioreactor. The ozone reactor can be an ozone-fed reactor. As an alternative to ozone, peroxide might be used in the process as an oxidant.

According to others embodiments, means for contacting the Produced Water stream with an oxidant comprises injection means plugged in a duct connecting the system of separation by physical way and the aerobic bioreactor.

According to others embodiments, means for contacting the Produced Water stream with an oxidant comprises injection means plugged in the interface between the first stage and the second stage of the aerobic bioreactor.

The facility comprises further connecting means with a production well of an oil and gas field for extract the Produced water stream from said production well.

The facility comprises further connecting means with a production well of an oil and gas field for injecting the treated Produced water stream in said production well.

Preferred embodiments of the invention are disclosed in following description and the accompanying drawing which are merely illustrative of such invention.
Figure 1 represents a schematic illustration of one embodiment of the process and of the facility of the present invention.
Figure 2 shows experimental results relating to the acclimation of biomass to salinity and pollutants present in the Produced Water.
Figure 3 shows experimental results relating to the soluble chemical oxygen demand (COD) variation at the inlet and outlet of the process.
Figure 4 shows experimental results relating to recovery of biomass activity under a decreasing applied load followed by an increasing applied load.
Figure 5 shows experimental results relating to bio-treatment performances (removing the effluent toxicity from saline Produced Water)
Figure 6 shows experimental results relating to the COD concentration at the inlet and outlet of the process with and without ozone pretreatment.

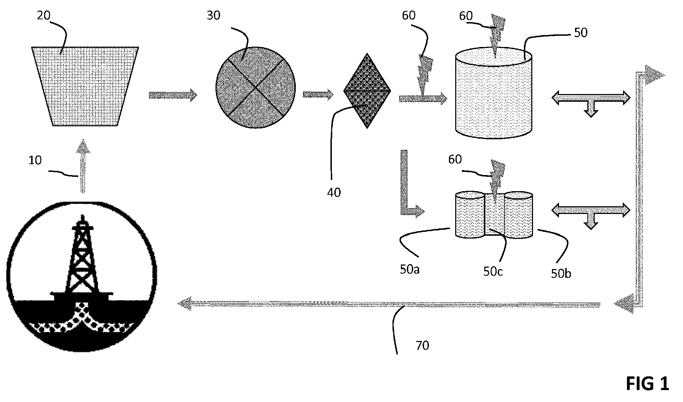

Referring to the Figure 1 of the drawing, there is represented a facility for treating a Produced Water stream issuing from a production well of an oil and gas field.

The term "Produced Water" means water that is produced as a byproduct along with crude oil or gas exploration and production, especially water brought to the surface in an oil or gas production process.

The physical and chemical properties of Produced Water vary considerably depending on the geographic location of the field, the geological formation from which it comes, and the type of hydrocarbon product being produced. The major constituents in Produced Water are suspended solids, dissolved solids, such as carbonate/bicarbonate, sulfate, silica and scale forming divalent ions, suspended oil and organic compounds, such as aliphatic hydrocarbons and aromatic hydrocarbons.

The method according to the invention is particularly suitable for Produced Water characterized by a soluble chemical oxygen demand (COD) less or equal to 50 g/L and by a total dissolved solids less or equal to 300 g/L.

The Produced Water arrives from a production well of an oil and gas field via a pipe 10 and is usually directed first of all to a primary oil-water separation unit 20 for a preliminary separation of suspended solids and oil from Produced Water stream. The primary separation unit can be a two or three phase separator, a free water knockout, a gun barrel, a heater treater, or other primary separation system.

As the Produced Water issuing from the primary oil-water separation unit 20 includes usually still small amounts of free or dissolved hydrocarbons and solids, the invention processes further with a first step of directing the Produced Water stream to a system of separation by physical way 30. Systems of separation by physical way include systems based on the gravity separation (often in combination with coalescing devices), gas flotation units, hydro-cyclones, disc-stack centrifuges, filtration units, membranes systems. The system of separation by physical way is connected upstream to an aerobic bioreactor 50.

Advantageously, the first step (which actually can comprise several different stages) is supplemented by a step of stripping for eliminating dissolved, volatile, organic compounds, according to which the first stream is directed to a gas stripping device. The system of separation by physical way 30 is thus connected to a gas stripping device 40, said device being upstream of means for contacting the Produced Water stream with an oxidant.

The step of stripping is a physical separation process where one or more components are removed from a liquid stream by a gaseous stream. The liquid and gaseous streams can have co-current or countercurrent flows and steps of stripping are usually carried out in either a packed or plate column.

The stripping device 40 may use several columns containing beds of granular polymer. The polymer acts as a support for an extraction medium specially selected for its capacity to absorb aqueous-phase hydrocarbons. The Produced Water to be treated is introduced into the columns and the hydrocarbons present in the water stream are removed by this absorption process. When a column is saturated with hydrocarbons, a regeneration of its material should be carried out. The regeneration is obtained by injecting vapor into the column: the hydrocarbons are stripped from the granules of support material by the vapor. This vapor, which leaves contaminated with the hydrocarbons, is then condensed. The hydrocarbons present in the condensate are physically separated by gravity and the resulting concentrate is removed as waste, or is recycled.

Before directing the stream issuing from the step of separation to the aerobic bioreactor, said stream is submitted to a second step of oxidizing by introducing in said stream an oxidant.

According to the invention, the facility comprises means 60 for contacting the Produced Water stream with an oxidant downstream of the system of separation of insoluble or volatile pollutants (and intermediate, optional biological reactor) and upstream of the main aerobic bioreactor, or in the aerobic bioreactor.

According to one embodiment of the invention such means comprise a reactor of ozone interposed between the system of separation by physical way 30 and the aerobic bioreactor.

According to one other embodiment of the invention such means comprise one or more injectors plugged in the line arriving in the aerobic bioreactor 50.

Preferably, the second step of oxidizing is performed by introduction of ozone, and more preferably, in an amount where the dose of transferred ozone is less or equal to 1 gram per gram of incoming Chemical Oxygen Demand of Produced Water.

Then, the oxidized stream is submitted to a third step of directing said stream to an aerobic bioreactor to achieve a biological treatment.

The aerobic bioreactor is preferably an aerobic biofilm system type of Moving Bed Bioreactor (MBBR), Integral Film Activated Sludge (IFAS) or Biological Aerated Filter (BAF), because biomass arranged as biofilm is more robust to feed variations and biofilm reactors allow for the development of biomass with a low growth rate, which is capable of biodegrading complex matrix. The strong resistance to shocks, such as salinity variation, and the high efficiency of mixed cultures, that is free and fixed culture (as found in IFAS), and especially of the biofilm of the fixed cultures, has been demonstrated by the Applicant on a six months pilot fed in a continuous mode with actual Produced Water containing 40 g/L COD and 30 g/L for salinity. Such aerobic bioreactors are especially suitable when the soluble chemical oxygen demand (COD) of the Produced Water is less or equal to 50 g/L and the total dissolved solids are less or equal to 300 g/L. The biomass of a MBBR, IFAS or BAF is particularly resistant to high salinity thanks to the support which serves to resist to an aggressive environments. In addition, if the biomass is fixed on a support, there is no more need to promote a flocculation for next separation of sludge in excess.

Advantageously, the step of biological treatment is performed according to a volumetric applied load greater or equal to 2 kg of incoming soluble Chemical Oxygen Demand (COD) per m³ of bioreactor and per day.

According to one embodiment, the aerobic bioreactor 50 may consist on a multistage bio-reactor comprising a first stage 50a and a second stage 50b separated by an interface 50c.

Under this configuration, means 60 for contacting the Produced Water stream with an oxidant comprises one or more injectors plugged in the line arriving in the first stage 50a and/or directly in the first stage 50a and/or directly in the interface 50c.

At the issue of the facility, the purified Produced Water stream recovered from the third step of biological treatment can be reinjected in a hydrocarbon bearing formation by means of the line 70 or discharged to a surface water body.

Experimentations were carried out on synthetic Produced Water based on organic and mineral composition of actual Produced Water in Oil and Gas fields.

Characteristics of Produced Water tested are presented in the Table 1. The salinity of the Produced Water tested is around 17 g/L.

**Table I**

| | | **Produced Water** |
|---|---|---|
| **Metals (µg/L)** | Cd | 11 |
| | Pb | 11 |
| | Zn | 46 |
| | Cu | 19 |
| | Ni | 13 |
| **Salts (mg/L)** | Na⁺ | 5 208 |
| | K⁺ | 76 |
| | Ca²⁺ | 34 |
| | Mg²⁺ | 13 |
| | SO₄²⁻ | 44 |
| | Cl⁻ | 8080 |
| **Phenols (mg/L)** | | 19,8 |
| **BTEX (mg/L)** | Toluene | 14,8 |
| **PAH (µg/L)** | Naphtalene | 223 |
| | Acenaphtylene | 5 |
| | Phenanthrene | 5 |
| **COD (mg/L)** | | 612 |
| **NH4-N (mg/L)** | | 22 |
| **PO4-P (mg/L)** | | 5 |
| **DOC (mg/L)** | | 311 |
| **Salinity (g/L eq NaCl)** | | ~17 |

The method for treating a Produced Water stream according to the invention has been carried out on synthetic Produced Water and tested step by step.

The indigo method was used to analyze the dissolved ozone concentration in the aqueous solution. Standard methods were used to analyze Chemical Oxygen Demand (COD; ISO 15705), Dissolved Organic Carbon (DOC; NF EN 1484), Biological Oxygen Demand at 5 days (BOD5; NF EN 1899-1), Polycyclic Aromatic Hydrocarbons (PAH; NF EN ISO 17993); metals (NF EN ISO 17294-2) and Benzene Toluene Ethylbenzene Xylenes (BTEX; NF EN ISO 10301).

Bio-treatment of Produced Water was realized at a laboratory scale in a reactor of 2.5 L. The biological system was a Sequencing Moving Bed Batch Reactor (SMBBR): a Moving Bed Bio-Reactor (MBBR) operated as a Sequencing Batch Reactor (SBR). A MBBR consists of a reactor in which there are mixed biomass that is both free biomass and fixed biomass:
- free biomass: the biomass is suspended freely in the water as it is the case in an activated sludge reactor
- fixed biomass: the biomass is supported on a carrier which is itself floating in the reactor.

On this laboratory scale test, the separation between the mixed liquor and the water was done by alternating the aeration periods and the separation periods based on a timer. Other options of separation could have been clarifier, flotator or membranes. Alternatively the biological stage could be a bio-filter which does not require a separation stage

In the SBR' sequencing mode two sequences every 12 hours were completed each day:
- Filling phase (20 min): injection of 1L of synthetic Produced Water;
- Reaction phase (10 h): mixing and alternating of aeration phase (10 min) and non-aeration phase (5 min);
- Settling phase (60 min): separation of biomass and treated effluent;
- Extraction of treated effluent (40 min).

Ozonation experiments were carried out in a thermo-regulated glass reactor (V = 1L) at 30°C. Ozone was produced from a dry oxygen flow in an ozone generator (model BMT 803N). The outlet gas of the ozone generator, containing about 180 g/m³ NTP of ozone, was bubbled through a porous plate at the bottom of the reactor. The outlet and inlet gas of the reactor was monitored using ozone gas analyzers (model BMT 964 BT).The ozone in the off-gas was trapped using potassium iodide (KI) solution contained in a wash bottle.

The gas flow was injected continuously at 0.5 L/min. The liquid flow was in batch mode for the determination of the ozone dose and in continuous mode (4.8 L/h) for the pretreatment of the water before bio-treatment.

First, bio-treatment experimentations have been conducted for 370 days with a direct injection of Produced Water (in 2 separate phases: organic and inorganic aqueous solution) into the bioreactors.

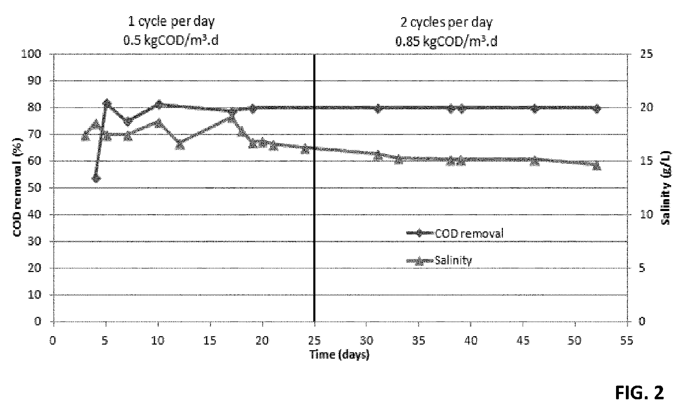

Two phases of acclimation were conducted for biomass (free and supported). The first phase is the acclimation to salinity. The salinity of the biomass was progressively increased up to the salinity of the Produced Water tested (17 g/L). The second phase (Figure 2) corresponds to the acclimation to pollutants present in the Produced Water. For this stage, a first step with one cycle per day was applied followed by an increased to two cycles per day. In the same time, the COD load applied was increased from 0.5 to 0.85 kg COD/m³.d.

A COD removal around 80% is observed during the acclimation phase. The biomass was not impacted by the change of volumetric load.

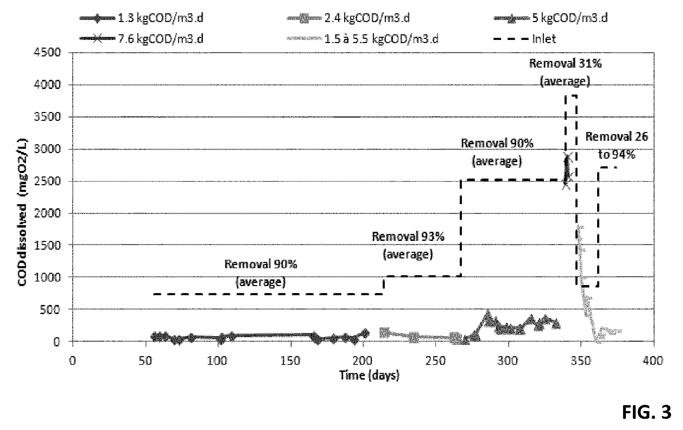

SMBBR trials were continued with the objective to reach the performance limit of the bio-treatment without pretreatment. The volumetric load applied to the reactor was thus increased gradually Volumetric load from 0.85 to 7.6 kg COD/m³.d was applied. Results for COD removal are presented in Figure 3.

Good removal efficiency for COD (around 90 %) is obtained up to a volumetric loading rate of 5 kg COD/m³.d. Same behavior was observed for the DOC content with a removal efficiency higher than 90%. The COD concentration at the outlet was below 150 mg/L for the applied load of 1.3 and 2.4 kg COD/m³.d and below 300 mg/L for the load of 5 kg COD/m³.d.

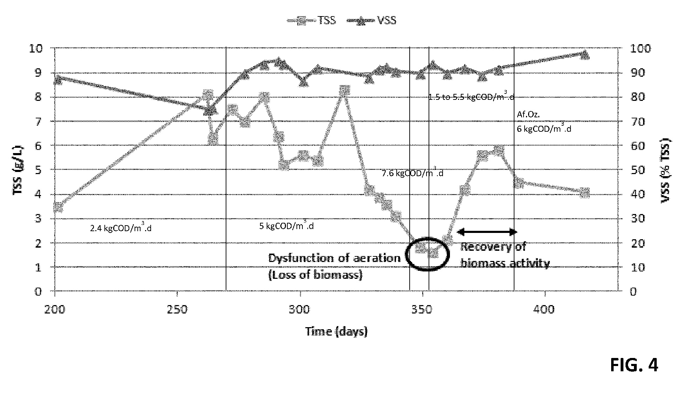

After a load increase to 7.6 kg COD/m³.d, a dysfunction of the aeration was observed. This fact conducted to a loss of biomass (Figure 4) and an important decrease of removal efficiency (around 30 %).

In order to promote the biomass growth, the applied load was then decreased to 1.5 kg COD/m³.d and a new gradual increase was carried out up to 5.5 kg COD/m³.d. After around 10 days, recovery of biomass activity was observed with an increase in biomass concentration (from 2 to 6 g/L as shown in Figure 4). In the same time, COD values at the outlet were decreased from 1500 mg/L to below 200 mg/L (removal percentage from 26 to 94 %).

Table II shows that bio-treatment in SMBBR mode was in addition efficient to reduce concentrations of PAHs and BTEX from the Produced Water for a volumetric load between 1.3 and 5 kg COD/m³.d. Removal efficiencies higher than 90% are observed for PAHs (represented by naphtalene, acenaphtylene and phenanthrene) and BTEX (represented by toluene). Concentrations obtained at the outlet were found below 4 µg/L for PAHs and 5 µg/L for toluene. This demonstrates the interest of biological treatment of Produced Water.

Percentages obtained for metals are lower than 70% for the load of 1.3 and 2.4 kg COD/m³.d and higher than 85% for the load of 5 kg COD/m³.d. And this can be explained by a higher biomass growth in this condition which can lead to a larger bio-sorption of metals within the bio-flocs. Metals are then adsorbed and will be removed from the reactor with the excess sludge.

**Table II : Substances removal by bio-treatment for different volumetric load applied**

| | **Removal (%)** | | | | |
|---|---|---|---|---|---|
| **Day** | **110** | **201** | **215** | **265** | **314** |
| *kgCOD*/*m³.d* | *1.3* | | *2.4* | | *5* |
| **Cd** | 3 | 66 | 8 | 83 | >96 |
| **Cu** | 69 | 65 | 67 | 65 | 88 |
| **Ni** | 8 | 0 | 72 | 89 | n.d. |
| **Pb** | 52 | 59 | 49 | 32 | >90 |
| **Zn** | 33 | 33 | 62 | 60 | 88 |
| **Naphtalene** | >99 | 99 | 99 | >99 | >99 |
| **Acenaphtylene** | 0 | >99 | >99 | >99 | 94 |
| **Phenanthrene** | 99 | >99 | >99 | >99 | 98 |
| **Toluene** | >99 | >99 | >99 | >99 | >99 |

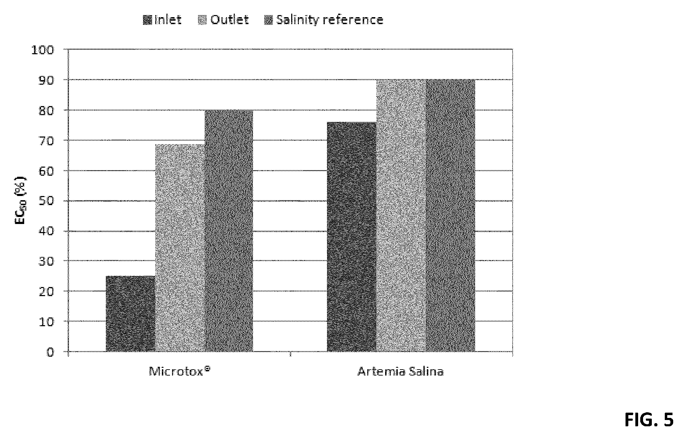

In Figure 5, results of eco-toxicity tests were presented for the volumetric load applied of 2.4 kg COD/m³.d.

Eco-toxicity of Produced Water before and after the bio-treatment was measured using standardized acute and chronic eco-toxicity tests on marine species. Acute toxicity of Produced Water was determined on bacteria bioluminescence (Microtox® ISO 11348-3) and on lethal toxicity to crustaceans (ISO 14669).

High toxicity is represented by a small EC₅₀ value in Figure 5. A high toxicity is observed on synthetic Produced Water (inlet) for the Microtox® test and a small toxicity for *Artemia Salina.* At the outlet of the bio-treatment, effluent toxicity is almost removed compare to salinity reference. This means that bio-treatment performances allow to reduce or remove the effluent toxicity from saline Produced Water (salinity: 17 g/L).

The results obtained show that bio-treatment can be acclimated to a saline Produced Water and can be efficient to treat Produced Water up to a volumetric load of 5 kg DCO/m³.d in the test conditions.

Prior to the coupling, the optimum dose to apply for ozone on Produced Water was determined. The objective was not to mineralize the molecules, but to enhance the biodegradability. A dose of 180 mg/L of O₃ was applied to the Produced Water.

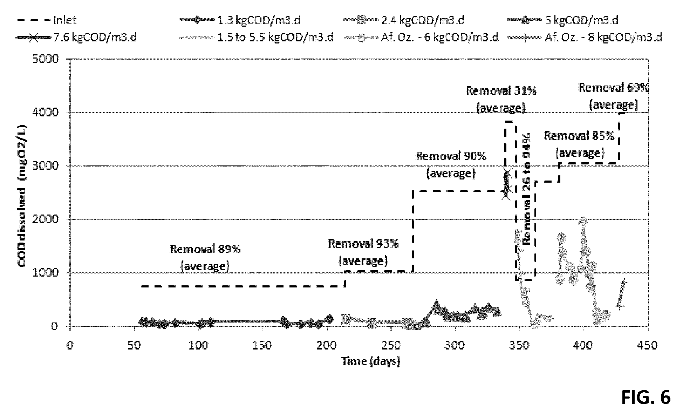

Two volumetric loads were tested at the inlet of bio-treatment after ozone pretreatment: 6 and 8 kg COD/m³.d. Figure 6 presents results obtained for COD concentration at the inlet and outlet of bio-treatment with (days 380 to 430) and without (days 50 to 379) pretreatment.

Application of ozonated water at the inlet of bio-treatment induces a decrease of removal efficiency during the first days. Removal efficiency around 55 % was observed during the first fifteen days. Biomass acclimation phase occurs reflecting the change in organic composition. After this phase, removal efficiency was increased to reach values around 90 %. Acclimation phase is needed to adapt the microorganisms to the ozonated water and to recover removal efficiency around 90% as observed in the previous phase. With the application of the volumetric load after ozonation of 8 kg COD/m³.d, the same scenario was observed; a first decrease of the efficiency of the bio-treatment with an increase of the COD concentration at the outlet from 390 to 830 mg/L and then decrease to achieve COD removal rate of more than 85% at the run stop when steady state was not really reached.

Comparison of the results obtained for PAHs, BTEX and metals between treatment of Produced Water by SMBBR with and without ozone pretreatment was presented in Table III. Comparison of the results was done with volumetric load without pretreatment close to 6 kg COD/m3.d. The results given for experiments using ozonation are presented as the percentage of removal (for example COD) due to the biological step ("Bio") and the removal due to the combination of the two steps of ozonation and of bio-treatment ("Oz + Bio").

**Table III : Comparison of substances removal from Produced Water with and without ozone pretreatment**

| | **Removal (%)** | | | | | | | | |
|---|---|---|---|---|---|---|---|---|---|
| | **Without ozonation** | | | **With ozonation** | | | | | |
| *kgCOD*/*m³.d* | *2.4* | | 5 | 6 | | | | | |
| **Day** | **215** | **265** | **314** | **409** | | **420** | | **423** | |
| **Outlet** | **Bio only** | **Bio only** | **Bio only** | **Bio** | **Oz + Bio** | **Bio** | **Oz + Bio** | **Bio** | **Oz + Bio** |
| **COD** | 90 | 80 | 82 | 81 | 82 | 84 | 85 | 79 | 81 |
| **BOD₅** | 98 | 99 | 83 | 88 | 92 | 85 | 90 | 83 | 86 |
| **Cd** | 8 | 83 | 96 | 89 | 88 | 91 | 91 | 95 | 95 |
| **Cu** | 67 | 65 | 88 | 92 | 92 | 92 | 92 | 90 | 90 |
| **Ni** | 73 | 89 | 5 | 56 | 54 | 56 | 54 | 9 | 16 |
| **Pb** | 49 | 32 | 90 | 17 | 14 | 0 | 0 | 60 | 57 |
| **Zn** | 62 | 60 | 88 | 88 | 88 | 65 | 65 | 68 | 70 |
| **Naphtalene** | >99 | >99 | >99 | 94 | >99 | 99 | >99 | 86 | >99 |
| **Acenaphtylene** | >99 | >99 | 94 | 0 | 98 | 0 | 99 | 0 | 99 |
| **Phenanthrene** | >99 | >99 | 98 | 0 | 89 | 0 | 97 | 0 | 92 |
| **Toluene** | >99 | >99 | >99 | 99 | >99 | 99 | >99 | 99 | >99 |

Table III shows very similar results in terms of efficiency for substances analyzed with or without ozonation. Removal rates around 90% were observed for PAHs and BTEX in the two cases with and without ozone pretreatment. When ozone pretreatment was applied, concentrations of acenaphtylene and phenantrene were reduced from Produced Water in the ozonation step before the bio-treatment step.

With the increase of the volumetric load applied after ozonation to the bio-treatement (from 6 to 8 kg COD/m³.d), a decrease of efficiencies were observed for PAHs and metals as the results observed for COD parameter.

Results obtained show that higher volumetric loads could be reached with ozone application prior to bio-treatment. High removal efficiencies were observed with volumetric loading rates higher than those that were demonstrated without pretreatment.

Other advantage of ozonation applied prior to biotreatment was shown by microscopic examination of biomass. Ozonation indeed promotes the maintaining of a very significant biomass composed of mycelia with spores germinating and bacteria forming floc. The whole reflects a complex enzyme metabolism acting in symbiosis with bacterial colonies. Mycelia growth is of major interest as such microorganism is able to modify organic matter under aerobic conditions, sometimes hostile to bacteria. The mycelia are particularly more resistant than bacteria to salinity.

Results obtained show that higher volumetric loads could be reached with ozone application prior to bio-treatment. High removal efficiencies were observed with volumetric loading rates higher than those that were demonstrated without pretreatment.

Technical evaluation was done to design a full-scale installation based on the presented lab results. Installation was designed with the following conditions:
- Flow: 12 500 m³/d;
- COD removal: from 1.3 g/L at the inlet to 0.2 g/L at the outlet (removal efficiency 85%);
- Temperature of Produced Water: 40°C.

Table IV presents the comparison of the size and of the weight of the equipment between bio-treatment with and without ozone pretreatment.

**Table IV : Comparison of size of full scale installation**

| | **Without ozone pretreatment** | **With ozone pretreatment** |
|---|---|---|
| **Size of bioreactor (m²)** | 523 | 327 |
| **Size of ozone equipment (m²)** | 0 | 60 |
| **Total surface (m²)** | 523 | 387 |
| **Total weight (t** | 2603 | 1956 |

According to Table IV, ozone application prior to bio-treatment conducts to a reduction of 26% for the size of the installation. Ozone application allows having more compact installation for the same influent to treat.

Ozone application prior to bio-treatment conducts also to a reduction of 25% for the weight of the installation. Ozone application allows implementation of such installation on Oil and Gas Offshore sites.

Afore detailed experimentations carried out on synthetic Produced Water aim to assess the performance of bio-treatment with ozonation for the treatment of Produced Water. Trials with a synthetic Produced Water with salinity of 17 g/L show the feasibility of bio-treatment for the treatment of this type of water. Ozonation is efficient to enhance biodegradability of Produced Water. Addition of pretreatment would increase the volumetric load accepted by the bio-treatment. As a pretreatment, it also enables to apply biological treatment on an effluent presenting toxicity for the biomass. Technical evaluation shows that for the same effluent to be treated, compactness of installation is higher with an hybrid process coupling ozonation and bio-treatment than with bio-treatment only.

## Claims

1. A method for treating a Produced Water stream from a production well of an oil and/or gas field, said method comprising:
- a first step of obtaining a first stream by directing the Produced Water stream to a system of separation by physical way (30);
- a second step of oxidizing the first stream by introducing in said stream an oxidant;
- a third step of directing the oxidized stream to an aerobic bioreactor (50; 50a, 50b), to achieve a biological treatment.

2. The method according to anyone of claim 1, wherein the second step of oxidizing the stream and the third step of biological treatment are concomitantly performed in the aerobic bioreactor.

3. The method according to anyone of claims 1 to 2, wherein said method comprises an intermediary step of directing the first stream to an aerobic bioreactor before performing the second step of oxidizing the first stream.

4. The method according to anyone of the preceding claims, wherein the first step comprises a step of stripping, by directing the first stream to a gas stripping device (40).

5. The method according to anyone of the preceding claim, wherein the second step of oxidizing the first stream is performed by introducing a chemical oxidant, preferably of ozone.

6. The method according to claim 5, wherein the second step of oxidizing the first stream is obtained by introducing ozone in an amount where the dose of transferred ozone is less or equal to 1 gram per gram of incoming Chemical Oxygen Demand of Produced Water.

7. The method according to anyone of the preceding claim, wherein the third step of biological treatment is performed by directing the oxidized stream in an aerobic biofilm system of type Moving Bed Bioreactor (MBBR), Integrated Film Activated Sludge (IFAS), or Biological Aerated Filter (BAF).

8. The method according to anyone of the preceding claim, wherein the soluble chemical oxygen demand (COD) of the Produced Water is less or equal to 50 g/L and the total dissolved solids are less or equal to 300 g/L.

9. The method according to anyone of the preceding claim, wherein the purified water stream recovered from the third step is reinjected in a hydrocarbon bearing formation or discharged to a surface water body.

10. A facility for treating a Produced Water stream from a production well of an oil and gas field, comprising a system of separation by physical way (30), said system being connected to an aerobic bioreactor (50; 50a, 50b),
wherein the facility comprises further means (60) for contacting the Produced Water stream with an oxidant downstream of the system of separation and upstream of the aerobic bioreactor, or in the aerobic bioreactor.

11. The facility according to claim 10, wherein the system of separation by physical way (30) is connected to a gas stripping device (40), said device being located upstream of means for contacting the Produced Water stream with an oxidant.

12. The facility according to anyone of the claims 10 to 11, wherein the aerobic bioreactor comprises a first stage (50a) and a second stage (50b) comprising a solid separation system (50c).

13. The facility according to anyone of the claims 10 to 12, wherein the aerobic bioreactor is an aerobic biofilm system type of Moving Bed Bioreactor (MBBR), Integral Film Activated Sludge (IFAS), or Biological Aerated Filter (BAF).

14. The facility according to anyone of the claims 10 to 13, wherein the systems of separation by physical way are selected in a list comprising cyclone, flotation systems, coalescing filters, gas stripping device, gravitational separation device, filtration device, or a combination thereof.

15. The facility according to anyone of the claims 10 to 14, wherein the means for contacting the Produced Water stream with an oxidant comprises an ozone reactor located between the system of separation by physical way and the aerobic bioreactor.

16. The facility according to anyone of the claims 10 to 15, wherein the means for contacting the Produced Water stream with an oxidant comprises injection means (60) plugged in a duct connecting the system of separation by physical way and the aerobic bioreactor.

17. The facility according to claim 12, wherein the means for contacting the Produced Water stream with an oxidant comprises injection means (60) plugged in the interface between the first stage and the second stage of the aerobic bioreactor.

18. The facility according to anyone of the claims 10 to 17, wherein said facility comprises first connecting means (10) with a production well of an oil and gas field for extract the Produced water stream from said production well.

19. The facility according to anyone of the claims 10 to 18, wherein said facility comprises second connecting means (70) with a production well of an oil and gas field for injecting the treated Produced water stream in said production well.
